# FASCICULE DE BREVET EUROPEEN

(11) **EP 0 751 036 B1**
(45) Date de publication et mention de la délivrance du brevet: **15.07.1998**
(21) Numéro de dépôt: 96400847.8
(22) Date de dépôt: 19.04.1996
(51) Int. Cl.: B60N 2/44, B21K 21/12

(54) **Elément de tube métallique et armature pour dossier de siège de véhicule automobile munie de cet élément**
Metalltubenteil und Sitzrückenlehne für Kraftfahrzeugsitzrückenlehne mit einem solchen Teil
Metallic tube element and backrest frame for motor vehicle seats provided with such element

(30) Priorité: 30.06.1995 FR 9507941
(43) Date de publication de la demande: 02.01.1997
(73) Titulaire: CESA COMPAGNIE EUROPEENNE DE SIEGES POUR AUTOMOBILES, 92307 Levallois-Perret Cédex (FR)
(72) Inventeur: Guillemard, Philippe, 45290 Nogent sur Vernisson (FR)
(74) Mandataire: Moncheny, Michel

(56) Documents cités:
- EP-A- 0 259 201
- EP-A- 0 625 445
- WO-A-93/16896
- DE-U- 9 416 771
- FR-A- 1 081 524
- US-A- 4 625 537

## Description

La présente invention concerne un élément de tube cylindrique métallique du type comprenant un organe de liaison cylindrique métallique mâle ou femelle formant notamment un arbre ou un palier d'articulation (voir par exemple EP-A-0 625 445 ou FR-A-1 081 524).

L'invention concerne également une armature pour siège de véhicule automobile comprenant cet élément de tube et un dossier de siège pour véhicule automobile comprenant cette armature.

On connaît déjà dans l'état de la technique un siège ou une banquette arrière pour véhicule automobile dont le dossier est monté basculant sur un plancher de l'habitacle afin de pouvoir moduler le volume disponible dans le coffre du véhicule.

Il est également connu dans l'état de la technique d'équiper un siège pour véhicule automobile d'une ceinture de sécurité embarquée comportant des moyens d'ancrage solidaires du siège, notamment du dossier. Ce dernier doit comporter une armature adaptée pour résister, en cas de choc, aux efforts transmis par les points d'ancrage de la ceinture. Dans le cas particulier d'un dossier basculant, les articulations de l'armature doivent être suffisamment résistantes pour transmettre au plancher les efforts subis par l'armature.

A ces impératifs s'ajoutent celui de minimiser le poids du siège et celui d'optimiser l'encombrement de l'articulation afin de dégager de la place pour d'autres équipements ou pour les passagers.

L'invention a notamment pour but de proposer un siège pour véhicule automobile muni d'articulations de dossier très résistantes permettant, lors d'un choc, de transmettre au plancher du véhicule les efforts subis par la ceinture de sécurité embarquée retenant un occupant au siège.

A cet effet, l'invention a pour objet un élément de tube métallique du type comprenant un organe de liaison cylindrique métallique mâle ou femelle, caractérisé en ce qu'il comprend un tronçon déformé dans lequel est agencé l'organe de liaison, ce tronçon ayant une section transversale en forme générale de T conformée par rabattement d'une moitié du contour de l'élément de tube sur l'autre moitié de ce contour et par pliage, l'une contre l'autre, de deux zones longitudinales de bordure du tronçon, de manière qu'elles s'étendent sensiblement perpendiculairement à une zone longitudinale centrale du tronçon qui les relie, l'organe de liaison étant agencé dans le tronçon déformé de manière que son axe s'étende sensiblement perpendiculairement à la zone centrale et dans un plan de jonction des zones de bordure.

Suivant des caractéristiques de différents modes de réalisation de l'élément de tube:
- l'organe de liaison cylindrique est un organe mâle agencé dans le tronçon déformé par encastrement, à travers un perçage ménagé dans la zone centrale, entre les deux zones de bordure, ces zones de bordure comprenant des déformations sensiblement hémicylindriques enveloppant l'organe de liaison ;
- l'organe de liaison fait saillie à travers le perçage, à l'opposé des zones de bordure ;
- les zones de bordures et l'organe mâle sont soudés entre eux ;
- l'organe de liaison comporte un collet d'ancrage enserré dans des plis du tronçon déformé reliant les zones de bordure et la zone centrale ;
- l'organe de liaison cylindrique est un organe femelle délimité par un perçage ménagé dans la zone centrale et par des déformations sensiblement hémicylindriques coaxiales au perçage, ménagé dans les zones de bordure ;
- le tronçon déformé délimite une extrémité de l'élément de tube.

L'invention a également pour objet une armature pour siège de véhicule automobile comprenant au moins un élément de tube tel que défini ci-dessus, caractérisée en ce que l'organe de liaison forme un pivot ou un palier d'articulation de l'armature.

Suivant d'autres caractéristiques de cette armature:
- elle comporte deux éléments de tube latéraux comportant des organes de liaison coaxiaux matérialisant un axe d'articulation de l'armature, ces éléments de tube étant délimités de préférence par des branches d'un même tube plié en U ;
- elle comporte une traverse dont les extrémités sont fixées dans des enfoncements délimités, sur chaque élément de tube, par un tronçon de transition reliant le tronçon déformé à un tronçon cylindrique non déformé.

L'invention a également pour objet un dossier de siège pour véhicule automobile comprenant une armature telle que définie ci-dessus.

L'invention sera mieux comprise à la lecture de la description qui va suivre donnée uniquement à titre d'exemple et faite en se référant aux dessins annexés dans lesquels :
- la figure 1 est une vue en perspective d'un dossier de siège pour véhicule automobile comprenant deux éléments de tube selon un premier mode de réalisation de l'invention ;
- la figure 2 est une vue de détail en perspective d'un élément de tube selon ce premier mode de réalisation de l'invention ;
- la figure 3 est une vue suivant la flèche 3 de la figure 2 ;
- la figure 3A est une section suivant la ligne 3A-3A de la figure 3 ;
- la figure 4 est une vue en coupe suivant la ligne 4-4 de la figure 3 ;
- la figure 5 est une vue en coupe suivant la ligne 5-5 de la figure 4 ;
- la figure 6 est une vue similaire à la figure 2, montrant une traverse d'armature reliée à l'élément de tube ;
- la figure 7 est une vue similaire à la figure 5 d'un élément de tube selon un second mode de réalisation de l'invention ;
- la figure 8 est une vue similaire à la figure 4 d'un élément de tube selon un troisième mode de réalisation de l'invention.

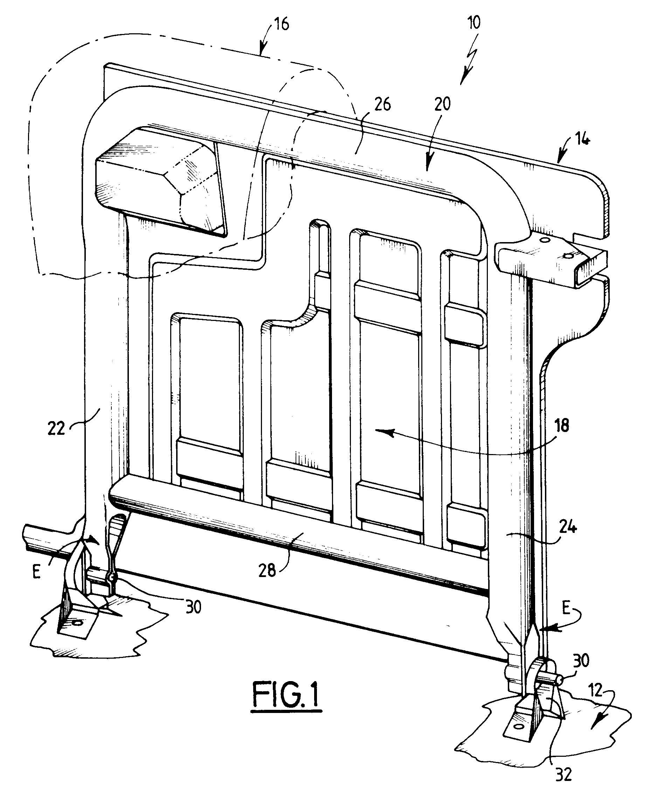

On a représenté sur la figure 1 un dossier de siège pour véhicule automobile, désigné par la référence générale 10, monté basculant sur un plancher 12 d'un habitacle du véhicule.

Le dossier 10 comporte une armature 14 revêtue de façon connue en soi d'une matelassure 16 dont on a représenté uniquement une portion en trait mixte.

L'armature 14 comprend un panneau de tôle emboutie 18 fixé sur un tube cylindrique métallique 20 plié en U.

Le tube 20 comporte deux branches latérales parallèles 22,24 reliées entre elles par une âme transversale 26. Les extrémités libres E des branches 22,24 forment des éléments de tube selon un premier mode de réalisation de l'invention. Une traverse 28, s'étendant à proximité des éléments E, relie les branches 22,24.

Les éléments de tube E comprennent chacun un organe de liaison cylindrique métallique mâle qui forme un pivot d'articulation 30 et qui est monté dans un palier 32 solidaire du plancher 12.

Les pivots 30 des éléments de tube E sont coaxiaux et matérialisent un axe d'articulation de l'armature 14 permettant le basculement du dossier 10.

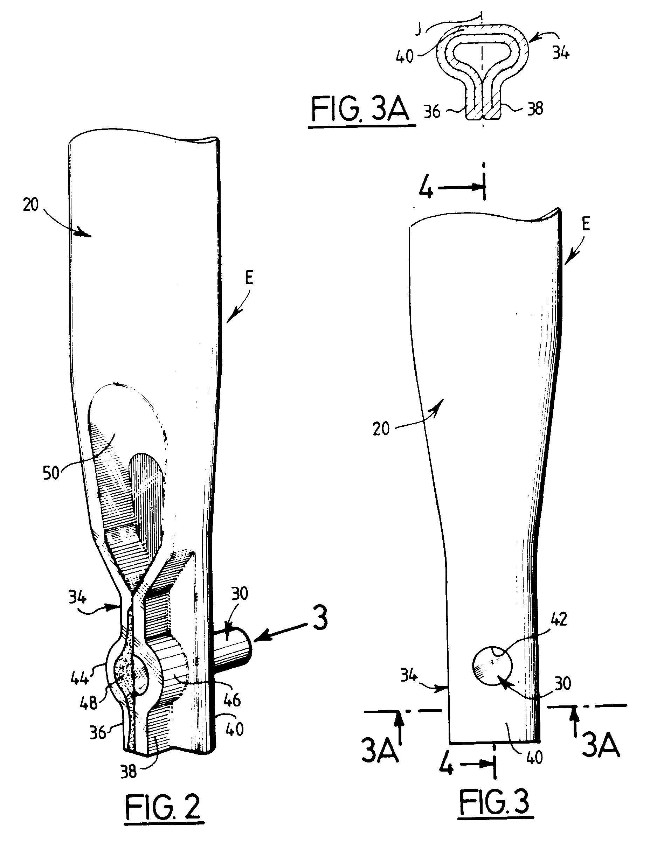

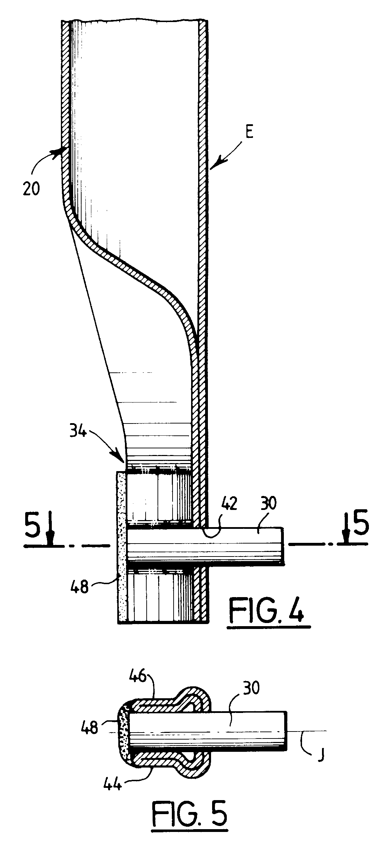

On a représenté plus en détail sur les figures 2 à 5 un élément de tube E de l'armature 14.

Sur ces figures, on voit que l'élément de tube E comprend un tronçon déformé 34 dans lequel est agencé le pivot 30. Comme on peut le voir en particulier sur la figure 3A, le tronçon déformé 34 a une section transversale en forme générale de T conformée par rabattement d'une moitié du contour de l'élément de tube sur l'autre moitié de ce contour et par pliage, l'une contre l'autre, de deux zones longitudinales 36,38 de bordure du tronçon 34, de manière qu'elles s'étendent sensiblement perpendiculairement à une zone longitudinale centrale 40 du tronçon 34 qui les relie.

Le pivot 30 est encastré, à travers un perçage 42 ménagé dans la zone centrale 40, entre les deux zones de bordure 36,38. Ces zones 36,38 comprennent des déformations 44,46 sensiblement hémicylindriques enveloppant le pivot 30.

L'axe du pivot 30 s'étend sensiblement perpendiculairement à la zone centrale 40 et dans un plan J de jonction des zones de bordure 36,38.

Le pivot 30 fait saillie à travers le perçage 42, à l'opposé des zones de bordure 36,38.

Dans l'exemple illustré sur les figures 2 à 5, les zones de bordure 36,38 et le pivot 30 sont reliés entre eux par un cordon de soudure 48.

Le tronçon 34 est conformé par des moyens classiques, par exemple une presse mécanique ou bien une machine de transfert hydraulique, cette dernière permettant d'effectuer les opérations de déformation du tube, d'agencement automatique du pivot 30 et de soudure.

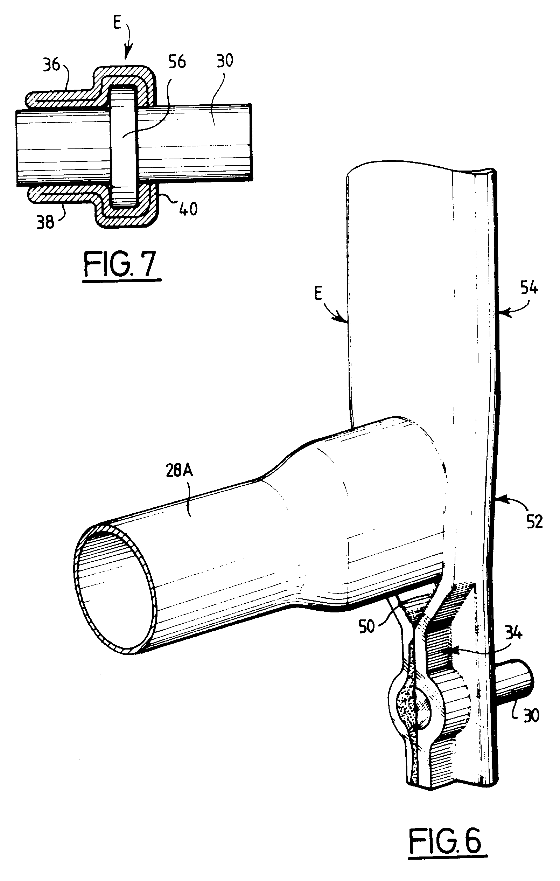

Sur la figure 6, on a représenté une variante de réalisation de l'armature 14.

Dans ce cas, cette armature comporte une traverse 28A dont les extrémités sont fixées dans des enfoncements 50 des éléments de tube E. Ces enfoncements 50 sont délimités, sur chaque élément de tube, par un tronçon de transition 52 reliant le tronçon déformé 34 à un tronçon cylindrique 54 non déformé.

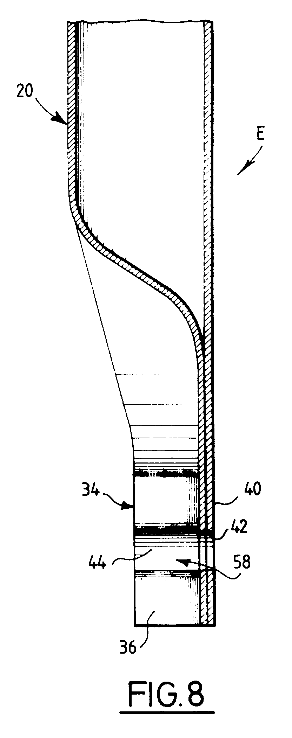

On a représenté sur les figures 7 et 8 d'autres modes de réalisation de l'élément de tube E.

Sur ces figures, les éléments analogues à ceux des figures précédentes sont désignés par des références identiques.

Sur la figure 7, on a représenté un élément de tube E selon un deuxième mode de réalisation de l'invention.

Dans ce cas, le pivot 30 comporte un collet d'ancrage 56 enserré dans des plis du tronçon déformé 34 reliant les zones de bordure 36,38 et la zone centrale 40.

Sur la figure 8, on a représenté un élément de tube E selon un troisième mode de réalisation de l'invention.

Dans ce cas, l'élément de tube E comporte un organe de liaison cylindrique femelle 58 délimité par le perçage 42 et les déformations 44,46 sensiblement hémicylindriques, coaxiales au perçage 42.

L'organe de liaison 58 forme ainsi un palier destiné à recevoir un pivot d'articulation solidaire du plancher.

Le palier 58 est formé par exemple au moyen d'une broche de formage de forme complémentaire qui est agencée dans le tube pour la conformation de la zone 34 et qui est retirée par la suite.

L'invention ne se limite pas aux modes de réalisation décrits précédemment.

En particulier, le tronçon déformé 34 peut être agencé sur une partie quelconque du tube qui n'est pas nécessairement son extrémité.

L'élément de tube selon l'invention peut être intégré dans une armature d'assise, l'organe de liaison qu'il porte formant par exemple un goujon de fixation de l'assise sur une glissière.

L'invention comporte de nombreux avantages.

Elle permet d'articuler sur un plancher de véhicule une armature de siège à l'aide de moyens très simples et peu encombrants.

Le pivot d'articulation ancré dans le tronçon déformé 34 est constitué par exemple par un simple tronçon de métal étiré, de coût très réduit.

La fixation du pivot sur l'élément de tube se fait de façon très simple, par ancrage et soudage du pivot.

La zone déformée 34 est très résistante à la flexion dans les deux directions orthogonales matérialisées par la section en T. Le tronçon déformé 34 est également très résistant à la torsion.

Les éléments de tube selon l'invention permettent d'obtenir une bonne continuité de matière entre le tube d'armature de dossier et ses articulations, en optimisant ainsi la résistance de l'ensemble de l'armature. De plus, le tronçon déformé 34 est délimité par une double épaisseur de paroi de tube qui lui assure une très grande solidité.

L'invention permet d'équiper un siège de véhicule automobile avec des articulations de dossier très résistantes permettant, lors d'un choc, de transmettre au plancher du véhicule, sans subir de dommage, les efforts auxquels est soumise une ceinture de sécurité embarquée retenant un occupant du siège.

## Revendications

1. Elément de tube métallique du type comprenant un organe de liaison cylindrique métallique mâle (30) ou femelle (58), caractérisé en ce qu'il comprend un tronçon déformé (34) dans lequel est agencé l'organe de liaison (30,58), ce tronçon ayant une section transversale en forme générale de T conformée par rabattement d'une moitié du contour de l'élément de tube sur l'autre moitié de ce contour et par pliage, l'une contre l'autre, de deux zones longitudinales (36,38) de bordure du tronçon, de manière qu'elles s'étendent sensiblement perpendiculairement à une zone longitudinale centrale (40) du tronçon qui les relie, l'organe de liaison (30,58) étant agencé dans le tronçon déformé (34) de manière que son axe s'étende sensiblement perpendiculairement à la zone centrale (40) et dans un plan (J) de jonction des zones de bordure (36,38).

2. Elément de tube selon la revendication 1, caractérisé en ce que l'organe de liaison cylindrique est un organe mâle (30) agencé dans le tronçon déformé (34) par encastrement, à travers un perçage (42) ménagé dans la zone centrale (40), entre les deux zones de bordure (36,38), ces zones de bordure comprenant des déformations (44,46) sensiblement hémicylindriques enveloppant l'organe de liaison.

3. Elément de tube selon la revendication 2, caractérisé en ce que l'organe de liaison (30) fait saillie à travers le perçage (42), à l'opposé des zones de bordure (36,38).

4. Elément de tube selon la revendication 2 ou 3, caractérisé en ce que les zones de bordures (36,38) et l'organe mâle (30) sont soudés entre eux.

5. Elément de tube selon l'une quelconque des revendications 2 à 4, caractérisé en ce que l'organe de liaison (30) comporte un collet d'ancrage (56) enserré dans des plis du tronçon déformé (34) reliant les zones de bordure (36,38) et la zone centrale (40).

6. Elément de tube selon la revendication 1, caractérisé en ce que l'organe de liaison cylindrique est un organe femelle (58) délimité par un perçage (42) ménagé dans la zone centrale (40) et par des déformations sensiblement hémicylindriques (44,46) coaxiales au perçage (42), ménagé dans les zones de bordure (36,38).

7. Elément de tube selon l'une quelconque des revendications précédentes, caractérisé en ce que le tronçon déformé (34) délimite une extrémité de l'élément de tube.

8. Armature pour siège de véhicule automobile comprenant au moins un élément de tube (E) selon l'une quelconque des revendications précédentes, caractérisée en ce que l'organe de liaison forme un pivot (32) ou un palier (58) d'articulation de l'armature (20).

9. Armature selon la revendication 8, caractérisée en ce qu'elle comporte deux éléments de tube (E) latéraux comportant des organes de liaison coaxiaux (30,58) matérialisant un axe d'articulation de l'armature, ces éléments de tube étant délimités de préférence par des branches (22,24) d'un même tube (20) plié en U.

10. Armature selon la revendication 9, caractérisée en ce qu'elle comporte une traverse (28A) dont les extrémités sont fixées dans des enfoncements (50) délimités, sur chaque élément de tube, par un tronçon de transition (52) reliant le tronçon déformé (34) à un tronçon cylindrique (54) non déformé.

11. Dossier de siège pour véhicule automobile comprenant une armature selon l'une quelconque des revendications 8 à 10.

## Claims

1. Metal tubular element of the type incorporating a male (30) or female (38), metal, cylindrical connecting member, characterized in that it comprises a deformed section (34) in which is located the connecting member (30, 58), said section having a generally T-shaped cross-section shaped by turning down half the contour of the tubular element onto the other half of said contour and by bending against one another two longitudinal edge areas (36, 38) of the section, so that they extend substantially perpendicular to a central longitudinal area (40) of the section connecting them, the connecting member (30, 58) being located in the deformed section (34) in such a way that its axis extends substantially perpendicular to the central area (40) and in a joining plane (J) of the edge areas (36, 38).

2. Tubular element according to claim 1, characterized in that the cylindrical connecting member is a male member (30) placed in the deformed section (34) by insertion, through a cutout (42) made in the central area (40), between the two edge areas (36, 38), said edge areas having substantially semicylindrical deformations (44, 46) enveloping the connecting member.

3. Tubular element according to claim 2, characterized in that the connecting member (30) projects through the cutout (42) opposite to the edge areas (36, 38).

4. Tubular element according to claim 2 or 3, characterized in that the edge areas (36, 38) and male member (30) are welded together.

5. Tubular element according to any one of the claims 2 to 4, characterized in that the connecting member (30) has an anchoring collar (56) enclosed in folds of the deformed section (34) connecting the edge areas (36, 38) and the central area (40).

6. Tubular element according to claim 1, characterized in that the cylindrical connecting member is a female member (58) defined by a cutout (42) made in the central area (40) and by substantially semicylindrical deformations (44, 46) coaxial to the cutout (42) and made in the edge areas (36, 38).

7. Tubular element according to any one of the preceding claims, characterized in that the deformed section (34) defines one end of the tubular element.

8. Car seat frame incorporating at least one tubular element (E) according to any one of the preceding claims, characterized in that the connecting member forms an articulation bearing (58) or pivot (32) for the frame (20).

9. Frame according to claim 8, characterized in that it incorporates two lateral tubular elements (E) having coaxial connecting members (30, 58) materializing an articulation axis of the frame, said tubular elements being preferably defined by branches (22, 24) of the same tube (20) bent in U-shaped manner.

10. Frame according to claim 9, characterized in that it has a cross-member (28A), whose ends are fixed in indentations (50) defined, on each tubular element, by a transition section (52) connecting the deformed section (34) to an undeformed, cylindrical section (54).

11. Car seat back incorporating a frame according to any one of the claims 8 to 10.

## Patentansprüche

1. Metallrohrelement, mit einem zylindrischen Metallsteckorgan (30) oder -hülsenorgan (58), gekennzeichnet durch ein verformtes Teil (34), in welchem ein Verbindungsorgan (30, 58) angeordnet ist, wobei das Teil einen allgemein T-förmigen Querschnitt aufweist, der durch Umschlagen einer Konturhälfte des Rohrelements auf die andere Hälfte dieser Kontur und durch gegenseitige Falzung von zwei Randlängszonen (36, 38) des Teils derart gebildet ist, daß sie sich im wesentlichen senkrecht zu einer Längsmittenzone (40) des Teils erstrecken, das sie verbindet, wobei das Verbindungsorgan (30, 58) in dem verformten Teil (34) derart angeordnet ist, daß seine Achse sich im wesentlichen senkrecht zur zentralen Zone (40) und in einer Verbindungsebene (J) der Randzonen (36, 38) erstreckt.

2. Rohrelement nach Anspruch 1, dadurch gekennzeichnet, daß das zylindrische Verbindungsorgan ein Steckorgan (30) ist, das in das verformte Teil (34) durch Einspannung durch eine Bohrung (42) hindurch angeordnet ist, die in der zentralen Zone (40) zwischen den Randzonen (36, 38) gebildet ist, wobei diese Randzonen im wesentlichen halbzylindrische Verformungen (44, 46) aufweisen, welche das Verbindungsorgan umschließen.

3. Rohrelement nach Anspruch 2, dadurch gekennzeichnet, daß das Verbindungsorgan (30) durch die Bohrung (42) in Gegenüberlage zu den Randzonen (36, 38) vorsteht.

4. Rohrelement nach Anspruch 2 oder 3, dadurch gekennzeichnet, daß die Randzonen (36, 38) und das Steckorgan (30) untereinander verschweißt sind.

5. Rohrelement nach einem der Ansprüche 2 bis 4, dadurch gekennzeichnet, daß das Verbindungsorgan (30) einen in den Falzen des verformten Teils (34) eingespannten Verankerungsflansch (56) aufweist, welche die Randzonen (36, 38) und die zentrale Zone (40) verbinden.

6. Rohrelement nach Anspruch 1, dadurch gekennzeichnet, daß das zylindrische Verbindungsorgan ein Hülsenorgan (58) ist, das durch eine Bohrung (42) begrenzt ist, die in der zentralen Zone (40) gebildet ist, und durch im wesentlichen halbzylindrische Verformungen (44, 46) koaxial zu der Bohrung (42), die in den Randzonen (36, 38) gebildet ist.

7. Rohrelement nach einem der vorangehenden Ansprüche, dadurch gekennzeichnet, daß das verformte Teil (34) ein Ende des Rohrelements begrenzt.

8. Beschlag für einen Kraftfahrzeugsitz, aufweisend zumindest ein Rohrelement (E) gemäß einem der vorangehenden Ansprüche, dadurch gekennzeichnet, daß das Verbindungsorgan eine Schwenkachse (32) oder ein Schwenklager (58) für den Beschlag (20) bildet.

9. Beschlag nach Anspruch 8, dadurch gekennzeichnet, daß er zwei seitliche Rohrelemente (E) umfaßt, welche koaxiale Verbindungsorgane (30, 58) umfassen, welche eine Beschlagschwenkachse festlegen, wobei diese Rohrelemente bevorzugt durch die Schenkel (22, 24) ein und desselben U-förmig gebogenen Rohrs (20) begrenzt sind.

10. Beschlag nach Anspruch 9, dadurch gekennzeichnet, daß er eine Traverse (28A) umfaßt, deren Enden in Vertiefungen (50) festgelegt sind, die auf jedem Rohrelement durch ein Verbindungsteil (52) begrenzt sind, welches das verformte Teil (34) mit einem nicht verformten zylindrischen Teil (54) verbindet.

11. Sitzrücklehne für ein Kraftfahrzeug, aufweisend einen Beschlag nach einem der Ansprüche 8 bis 10.
